# EUROPÄISCHE PATENTSCHRIFT

(11) **EP 0 954 891 B1**
(45) Veröffentlichungstag und Bekanntmachung des Hinweises auf die Patenterteilung: **21.01.2004**
(21) Anmeldenummer: 98958191.3
(22) Anmeldetag: 09.10.1998
(51) Int. Cl.: H01T 19/00, B60S 1/38, B60S 1/02

(54) **Verfahren zur Hydrophilierung von Oberflächen von Kraftfahrzeugscheiben**
Method for hydrophylizing surfaces of motor vehicle screens
Procédé permettant d'hydrophiliser les surfaces des glaces d'une voiture

(30) Priorität: 24.10.1997 DE 19746989
(43) Veröffentlichungstag der Anmeldung: 10.11.1999
(73) Patentinhaber: ROBERT BOSCH GMBH, 70442 Stuttgart (DE)
(72) Erfinder: KUHN, Ulrich, D-71272 Renningen (DE); METZGER-GORONZY, Werner, D-71229 Leonberg (DE); LEUTSCH, Wolfgang, D-77830 Bühlertal (DE); BRAUN, Hans, D-70178 Stuttgart (DE)
(86) Internationale Anmeldenummer: PCT/DE1998/002984
(87) Internationale Veröffentlichungsnummer: WO 1999/022429

(56) Entgegenhaltungen:
- EP-A- 0 462 526
- US-A- 5 466 424
- PATENT ABSTRACTS OF JAPAN vol. 12, no. 387 (C-536) [3234], 14. November 1988 & JP 63 134053 A (TOYODA GOSEI CO LTD), 6. Juni 1988

## Beschreibung

Die Erfindung betrifft ein Verfahren zur Hydrophilierung von Kraftfahrzeugscheiben mit den im Oberbegriff des Anspruchs 1 genannten Merkmalen.

### Stand der Technik

Es ist bekannt, dass auf Oberflächen auftreffende Feuchtigkeit infolge auftretender Grenzspannungen zur Ausbildung von feinen Wassertröpfchen in Form von Kugelkalotten führt. Insbesondere bei Scheiben von Kraftfahrzeugen wird hierdurch die Sicht eines Kraftfahrzeugführers verschlechtert. Die sich auf der Oberfläche der Fahrzeugscheibe ansammelnden Tröpfchen wirken als Sammellinsen mit kurzer Brennweite, wodurch es zu einer starken Erhöhung des Streulichtanteils und einer damit verbundenen erheblichen Sichtbeeinträchtigung kommt. Um die hiermit verbundenen Nachteile zu beseitigen, ist bekannt, die Oberfläche der Kraftfahrzeugscheiben zu hydrophilieren. Hierdurch soll erreicht werden, dass der Kontaktwinkel von Wasser auf dieser Oberfläche sehr klein wird und im Grenzfall filmartiger Benetzung gegen Null geht, so dass es zu einer nur noch entsprechend sehr geringen Änderung des Brechungswinkets kommt. Üblicherweise werden dem Waschwasser chemische Zusätze beigemischt, die eine Hydrophilierung der Scheiben gewährleisten sollen. Neben den unerwünschten Nebenwirkungen durch die chemischen Zusätze ist hierbei nur ein sehr unvollkommenes, das heißt nur kurzfristig wirkendes Ergebnis erzielbar.

Ähnliches gilt auch für ein aus der EP 0 462 526 A bekanntes Scheibenreinigungsverfahren, bei dem eine Hydrophilierung der Oberflächen angestrebt wird, indem man hydrophobe Substanzen, die sich auf den Oberflächen abgelagert haben, während des Wischvorgangs der Scheibenwischanlage durch einen Poliervorgang abträgt.

Aus den Patent Abstracts of Japan, vol. 12, No. 387 (C-536) [3234] vom 14. November 1988 und der JP 63 134053 A, sowie aus der US 5 466 424 A ist es weiter bereits an sich bekannt, dass die Benetzbarkeit der inneren Oberfläche einer Tintenflasche bzw. von diversen Kunststoff- und Metalloberflächen mit Hilfe einer Koronaentladung verbessert werden kann.

### Vorteile der Erfindung

Das erfindungsgemäße Verfahren mit den im Anspruch 1 genannten Merkmalen bietet demgegenüber den Vorteil, dass in einfacher Weise mit fahrzeugeigenen Mitteln eine relativ lang anhaltende und rückstandsfreie Hydrophilierung der Oberfläche von Kraftfahrzeugscheiben möglich ist. Dadurch, dass die Oberfläche einer Koronaentladung ausgesetzt wird, kann auf der Oberfläche der Scheiben eine Beeinflussung der Molekularstruktur erzielt werden, die zu einer Verringerung von Grenzspannungen zwischen der Oberfläche und auf der Oberfläche auftreffender Feuchtigkeit führt, so dass eine sehr viel größere Spreitung von Feuchtigkeitstropfen auf der Oberfläche möglich ist. Durch den hiermit verbundenen sehr viel kleineren Kontaktwinkel bildet sich auf der mittels der Koronaentladung hydrophilierten Oberfläche ein dünner Film aus, dessen Oberfläche im Wesentlichen parallel zur Oberfläche der Scheibe verläuft, so dass insbesondere beim Einsatz an Kraftfahrzeugscheiben eine Änderung des Brechungswinkels von durchfallendem Licht nicht auftritt. Hierdurch wird eine Beeinträchtigung der Beobachtung von Objekten durch den Kraftfahrzeugführer vermindert. Dadurch, dass die Hydrophilierung erfolgt, indem man die Oberfläche über die Scheibenwischanlage und insbesondere über einen als Elektrode fungierenden Scheibenwischergummi einer Koronaentladung aussetzt, wird es vorteilhaft möglich, die Hydrophilierung der Scheibenoberfläche entweder permanent mit jeder Ingangsetzung der Scheibenwischanlage oder in festlegbaren Abständen, innerhalb derer erfahrungsgemäß die Hydrophilierung nachlässt, zu wiederholen.

Weitere vorteilhafte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: eine schematische Ansicht zur Koronabehandlung von Oberflächen; und
- Figur 2: eine schematische Ansicht einer Anordnung zur Koronabehandlung von Oberflächen von Kraftfahrzeugscheiben.

### Beschreibung der Ausführungsbeispiele

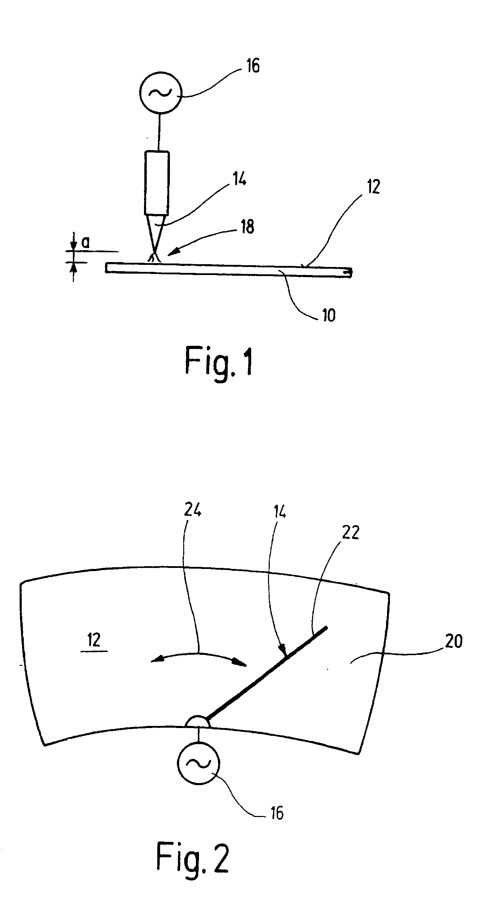

In Figur 1 ist ein Gegenstand 10 gezeigt, dessen Oberfläche 12 hydrophiliert werden soll. Hierzu wird eine Elektrode 14 in einem Abstand a über die Oberfläche 12 geführt. Die Elektrode 14 kann beispielsweise punkt-, linien- oder flächenförmig ausgebildet sein. Die Elektrode 14 ist mit einer Wechselspannungsquelle 16 verbunden, die eine hochfrequente Wechselspannung bereitstellt. Die Höhe der Wechselspannung beträgt beispielsweise 10 kV mit einer Frequenz von 300 KHz. Durch Anlegen der Wechselspannung an die Elektrode 14 kommt es zu hier lediglich angedeuteten Koronaentladungen 18. Diese Koronaentladungen 18 resultieren aus einem Anwachsen der Feldstärke an der Elektrode 14, so daß in diesem Bereich entstandene Ionen und Elektronen unter erheblichem Energiegewinn beschleunigt werden. Dabei bilden diese bei Zusammenstößen mit Gasmolekülen eine Vielzahl weiterer Ionen, die ebenfalls beschleunigt werden. Hierdurch kommt es zu einer lawinenähnlichen Vermehrung von Ladungsträgern, und somit zu der Koronaentladung 18, die die Hochspannung zusammenbrechen läßt. Dieser Vorgang wiederholt sich fortlaufend, so daß mittels der Koronaentladung 18 die Oberfläche 12 mit den beschleunigten Ladungsträgern behandelt werden kann. Entsprechend der Größe der Oberfläche 12 und/oder der Form der Elektrode 14 kann die Oberflächenbehandlung durch eine x-y-Rasterung der Oberfläche 12 durch die Elektrode 14 erfolgen. Bei linienförmigen Elektroden 14 kann eine Bewegung lediglich in x-Richtung erfolgen, während bei beispielsweise flächenhaften Elektroden ein einmaliges Heranführen an die Oberfläche 12 ausreichend ist.

Die Intensität der Oberflächenbehandlung kann einerseits durch Variation des Abstandes a, durch Dauer der Behandlung pro Flächeneinheit oder durch Höhe der Wechselspannung der Wechselspannungsquelle 16 variiert werden.

Figur 2 zeigt rein schematisch eine mögliche Anordnung an einer Windschutzscheibe 20 eines nicht näher dargestellten Kraftfahrzeuges. Hierbei kann die Wechselspannungsquelle 16 in geeigneter Weise mit einem Wischerblatt 22 einer Scheibenwischanlage kombiniert werden. Während des bestimmungsgemäßen Einsatzes wird das Wischerblatt 22 entsprechend des dargestellten Doppelpfeiles 24 über die Windschutzscheibe 20 hin- und herbewegt. Ist nun in das Wischerblatt 22 die Elektrode 14 integriert, oder weist das Wischerblatt 22 die Elektrode 14 auf, beispielsweise als Linienelektrode oder als entlang des Wischerblattes 22 beabstandet zueinander angeordnete Punktelektroden, kann während der Wischbewegung die Hydrophilierung der Oberfläche der Windschutzscheibe 20 erfolgen. Hierdurch wird vorteilhaft möglich, jederzeit, entweder während jedes Wischvorganges des Wischerblattes 22 oder in festgelegten Zeitintervallen die Hydrophilierung der Windschutzscheibe 20 mittels der Koronaentladung 18 durchzuführen.

Versuche haben gezeigt, daß durch die Hydrophilierung von Oberflächen 12, insbesondere von Oberflächen 12 von Windschutzscheiben 20, ein außerordentlich hoher Grad einer Hydrophilierung erreichbar ist. Ein nachfolgendes Aufbringen von Testtropfen hat zu einer nahezu vollständigen Spreitung der Tropfen geführt, so dass es zu einer Ausbildung eines Filmes auf der Oberfläche 12 kommt.

Es hat sich überraschenderweise gezeigt, dass durch die Koronabehandlung 18 der Oberflächen 12 bestimmte Rekombinationsreaktionen an den Oberflächen 12 ablaufen, die zu einer Ausrichtung der Molekülstruktur führen. Hierdurch wird die Hydrophilierung der Oberflächen 12 in starkem Maße, wie erläutert, begünstigt.

Die Erfindung beschränkt sich selbstverständlich nicht nur auf das Ausführungsbeispiel.

## Patentansprüche

1. Verfahren zur Hydrophilierung von Oberflächen von Kraftfahrzeugscheiben mittels einer Kraftfahrzeugscheibenwischanlage, **dadurch gekennzeichnet, dass** die Oberfläche (12) über die Scheibenwischanlage einer Koronaentladung (18) ausgesetzt wird.

2. Verfahren nach Anspruch 1, **dadurch gekennzeichnet, dass** einem Scheibenwischergummi (22) der Scheibenwischanlage wenigstens eine Elektrode (14) zugeordnet wird, die Elektrode (14) mit einer hochfrequenten Wechselspannungsquelle (16) verbunden wird, und die Koronaentladung (18) mit dem Betrieb der Scheibenwischanlage erfolgt.

3. Verfahren nach einem der vorhergehenden Ansprüche, **dadurch gekennzeichnet, dass** ein Grad der Hydrophilierung der Oberfläche (12) über eine Zeitdauer der Koronaentladung (18) eingestellt wird.

4. Verfahren nach einem der vorhergehenden Ansprüche, **dadurch gekennzeichnet, dass** ein Grad der Hydrophilierung der Oberfläche (12) über einen Abstand (a) der Elektrode (14) zur Oberfläche (12) eingestellt wird.

5. Verfahren nach einem der vorhergehenden Ansprüche, **dadurch gekennzeichnet, dass** ein Grad der Hydrophilierung der Oberfläche (12) über eine Höhe und/oder Frequenz der Wechselspannungsquelle (16) der Elektrode (14) eingestellt wird.

## Claims

1. Method for hydrophilizing surfaces of motor vehicle screens by means of a motor vehicle wiper system, **characterized in that** the surface (12) is exposed to a corona discharge (18) via the wiper system.

2. Method according to Claim 1, **characterized in that** a rubber wiper blade (22) of the wiper system is assigned at least one electrode (14), the electrode (14) is connected to a high-frequency AC voltage source (16), and the corona discharge (18) takes place as the wiper system is operating.

3. Method according to one of the preceding claims, **characterized in that** a degree of hydrophilizing of the surface (12) is set by means of a duration of the corona discharge (18).

4. Method according to one of the preceding claims, **characterized in that** a degree of the hydrophilizing of the surface (12) is set by means of a distance (a) between the electrode (14) and the surface (12).

5. Method according to one of the preceding claims, **characterized in that** a degree of hydrophilizing of the surface (12) is set by means of a level and/or frequency of the AC voltage source (16) of the electrode (14).

## Revendications

1. Procédé d'hydrophilisation de la surface de vitre d'un véhicule à l'aide de l'installation d'essuie-glace du véhicule,
**caractérisé en ce qu'**
on expose la surface (12) à une décharge par effet corona (18) à l'aide de l'installation d'essuie-glace.

2. Procédé d'hydrophilisation de la surface de vitre d'un véhicule selon la revendication 1.
**caractérise en ce qu'**
on associe au moins une électrode (14) au caoutchouc du balai d'essuie-glace (22) d'une installation d'essuie-glace, on relie l'électrode (14) à une source de haute tension alternative (16) et on produit la de charge par effet corona (18) pendant le fonctionnement de l'installation d'essuie-glace.

3. Procédé d'hydrophilisation de la surface de vitre de véhicule selon l'une des revendications précédentes,
**caractérisé en ce qu'**
on règle le degré d'hydrophilisation de la surface (12) par durée de la décharge par effet corona (18).

4. Procédé d'hydrophilisation de la surface de vitre de véhicule selon l'une des revendications précédentes.
**caractérisé en ce qu'**
on règle le degré d'hydrophilisation de la surface (12) par la distance (a) entre l'électrode (14) et la surface (12).

5. Procédé d'hydrophilisation de la surface de vitre de véhicule selon l'une des revendications précédentes.
**caractérisé en ce qu'**
on règle le degré d'hydrophilisation de la surface (12) par l'amplitude et/ou la fréquence de la tension alternative appliquée à l'électrode (14) par la source (16).
